Europäisches Patentamt

(19) European Patent Office

Office européen des brevets

(11) Publication number: **0 029 343**
**A2**

(12) # EUROPEAN PATENT APPLICATION

(21) Application number: **80304055.9**

(22) Date of filing: **12.11.80**

(51) Int. Cl.³: **F 16 L 55/18**

(30) Priority: **20.11.79 GB 7940162**

(43) Date of publication of application: **27.05.81**
**Bulletin 81/21**

(84) Designated Contracting States: **AT BE CH DE FR IT LI LU NL SE**

(71) Applicant: **EDMUND NUTTALL LIMITED, 22, Grosvenor Gardens, London, SW1W ODR (GB)**

(72) Inventor: **Naylor, Peter, 21, Suffield Close Selsdon Ridge, Selsdon South Croydon Surrey (GB)**

(74) Representative: **Smith, Geoffrey Leonard et al, Marks & Clerk 57/60 Lincoln's Inn Fields, London WC2A 3LS (GB)**

(54) **Lining cutter and cutting method.**

(57) In order to provide for the remote control and monitoring of a cutter support (48a) for pipe linings a body (11) is mounted, e.g. on skids (not shown). for transport through a lined pipe. A unit (32) is mounted on the body (11) so as to be adjustable longitudinally by a motor (44), angularly by a motor (37), and radially by a motor (56). The unit carries a motor (48) for the cutter (48a) and also a camera (49) trainable on the operative end of the cutter mounted on the support (48a) and also movable to a position (49a) where it is trained along the lined pipe. A second camera (41) is mounted in fixed position on the unit (32) substantially in the plane of the cutter.

230P39165X

Title: <u>Lining Cutter and Cutting method</u>

This invention relates to the cutting of linings of pipes to allow lateral and other connections to be made.

A major problem in the developed world is that water supply pipes and sewerage pipes and ducts are largely made from corrodible materials and are also in many cases of considerable age, e.g. over 100 years. A major programme of renewal of such pipeline would be enormously expensive, even if possible at all, owing to the complexity of the job and also the inaccessibility of many of the pipelines which pass beneath buildings and structures of many kinds.

Accordingly, there have been developed a number of processes of insertion of virtually incorrodible linings into such pipes. In one such process a felt tube impregnated with a curable resin is inserted into a pipe to be lined, e.g. using water pressure to force the tube through the pipe. The resin is then cured by circulating hot water through the interior of the tube which forms a permanent lining. For a fuller description of the process, reference may be made to United Kingdom Patent Specification 1 449 445 and 1 423 819.

This <u>in situ</u> formation of linings is not limited in its application to water supply and sewerage lines but may be used in a variety of applications where pipelines are

0029343

buried or otherwise inaccessible.

In another process, lengths of preformed linings are fed successively into a pipe or conduit to be lined, each length being butt-welded to the adjacent length. This process is known as slip lining.

It will be appreciated that where, as it almost without exception the case, lateral or other connections exist, the lining has to be cut, after insertion, to open communication to the connections. Where the line is large enough to allow access, e.g. over 2 feet (60 cm) diameter, this presents no great difficulty, but where the pipes are too small to admit of access, it is normally necessary to enter _via_ the laterally connected pipe, which normally involves excavation. The cost of excavation is high and the need for it detracts from the commercial value of lining the existing pipe or conduit rather than replacing it. In an alternative approach a cutting tool may be drawn through the lined pipe and remotely controlled to effect the required cutting.

According to a first aspect of the present invention, there is provided a lining cutter comprising a carriage adapted to be drawn through a lined pipe or conduit, a cutter adapted for rotary and radial adjustment on the carriage so as to cut through the lining at desired locations, a television camera mounted on the carriage so as to be trainable on the operative end of the cutter to monitor the position and activity thereof, and remotely operable controls for positioning and operating the cutter and camera.

The cutter may be mounted on a sliding block to achieve radial adjustment.

If required, the camera may also be mounted on the sliding block, but may be mounted solid with a slideway for the sliding block, so that the power requirement for shifting the block is reduced. The sliding block may be rotated together with a cooperating slideway to achieve conjoint rotary adjustment of the camera and cutter.

In order to provide for longitudinal adjustment without the need to move the carriage, the block and its slideway may be longitudinally adjustable on the carriage.

The carriage may be provided with skids to assist in its passage along the lined pipe and it may also be provided with a clamping rod to hold it in selected position.

The camera may be arranged for a pivotal movement independently of the adjustment of the cutter to enable it to be trained along the pipe as well as onto the operating end of the cutter.

A second camera may be mounted substantially in the plane of the cutter and axially and angularly fixed in relation thereto to monitor the precise position of the cutter.

- 4 -

According to a second aspect of the present invention, there is provided a method of cutting a lining in a pipe or conduit, using a lining cutter according to the invention as set forth above, in which the carriage is drawn through the pipe or conduit to a position wherein the cutter is roughly axially aligned with the desired parts of the cut, adjusting the position of the cutter axially and angularly to the desired position of commencement of cutting, advancing the cutter radially into position to initiate cutting' and adjusting the position of the cutter as the cutting progresses.

The invention will be further described with reference to the accompanying drawings, which show a preferred embodiment of the invention and in which :-

Figure 1 is a side elevation of a carriage showing its support and clamping arrangements;

Figure 2 is an end elevation of the carriage of figure 1;

Figure 3 is a partial plan view of the carriage of Figure 1;

Figure 4 is a vertical sectional view of the carriage of Figure 1 with additional parts shown in elevation;

Figure 5 is an end elevation of the structure of figure 4;

Figure 6 is a partial plan view of the structure of figure 4;

Figure 7 is a view similar to figure 4 showing some modifications; and

Figure 8 is a perspective view showing the modified assembly.

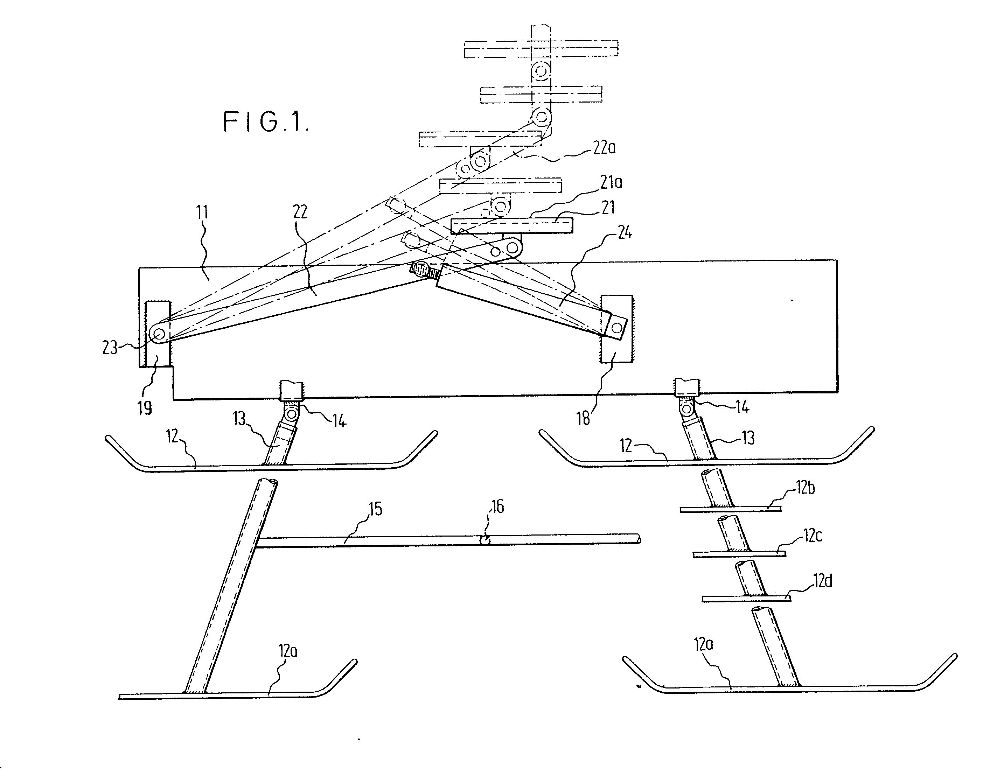

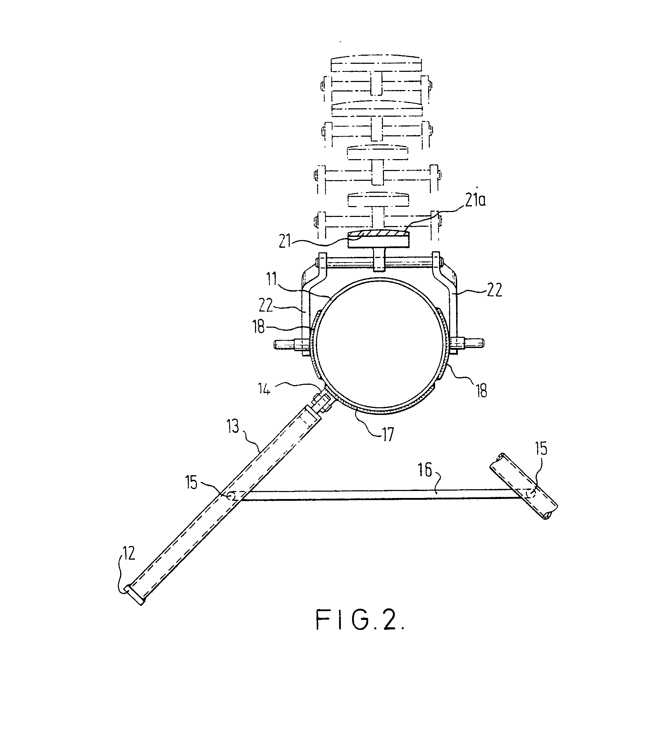

Turning first to figures 1 to 3, the body of a carriage is shown in outline at 11, and these figures are designed to show the supports on which the carriage 11 may be drawn through a lined pipe and then clamped in position. It will be understood that lined pipes come in a number of sizes, most of which are standardised, but a number of which are custom built. It is envisaged that the carriage 11 will be provided with skids 12 for a number of standard sizes, e.g. for pipes of 9 inches (22.5 cm), 12 inches (30 cm), 15 inches (37.5 cm), 19 inches (45 cm) and 24 inches (60 cm) diameter pipes. The skids will be in sets of four, i.e. a pair of trailing skids and a pair of leading skids for each standard size, and the variation will be achieved by differences in the length of the struts 13 extended between the skids 12 and skid supporting brackets 14. The struts 13 will be secured to the brackets 14 by means of pins and circlips so as to be reasonably readily removable and replaceable. Figure 1 shows a skid 12 of a small size and a skid 12a of a large size, and indicates the positions at 12b, 12c, and 12d of skids of the intermediate sizes. In view of the length of the struts 13 for the skids of the larger and intermediate sizes, longitudinal and lateral tie rods 15 and 16 are provided and are illustrated in their positions for the large size 12a. It will be seen from Figure 2 in particular that the body 11 is provided with a reinforcing band 17 in the zone of attachment of each of the brackets 14.

When the body 1 is mounted on skids of the appropriate size, it will be substantially centrally located within the standard size pipe, and when working in a non-standard pipe, the body will be as nearly centralised as is possible by choice of the appropriate set of skids.

In order to stabilise the position of the body 11 in a pipe, it is provided with a clamping pad 21 pivotally mounted on a pair of jacking arms 22 themselves pivoted at 23 to the body 11. Each jacking arm 22 is associated with a pneumatic ram 24 pivoted both on the body 11 and on the jacking arm 22 so as to push the resilient face 21a of the clamping pad against the pipe lining. The ram 24 is preferably single acting so that in the event of failure of the air supply, the carriage is released from the lining and can be removed. Various positions

- 7 -

of the pad 21 are illustrated particularly in Figure 2.

For some of the larger sizes of pipe, the jacking arms 22 may be extended by extension arms 22a to increase their length sufficiently for adequate movement of the pad 21 with a fairly limited stroke of the rams 24. It will be seen that the body is also provided with reinforcements 18 and 19 where the pivot pins for the rams 24 and jacking arms 22 are connected. For clarity of illustration, the rams 24 have been omitted from Figure 2.

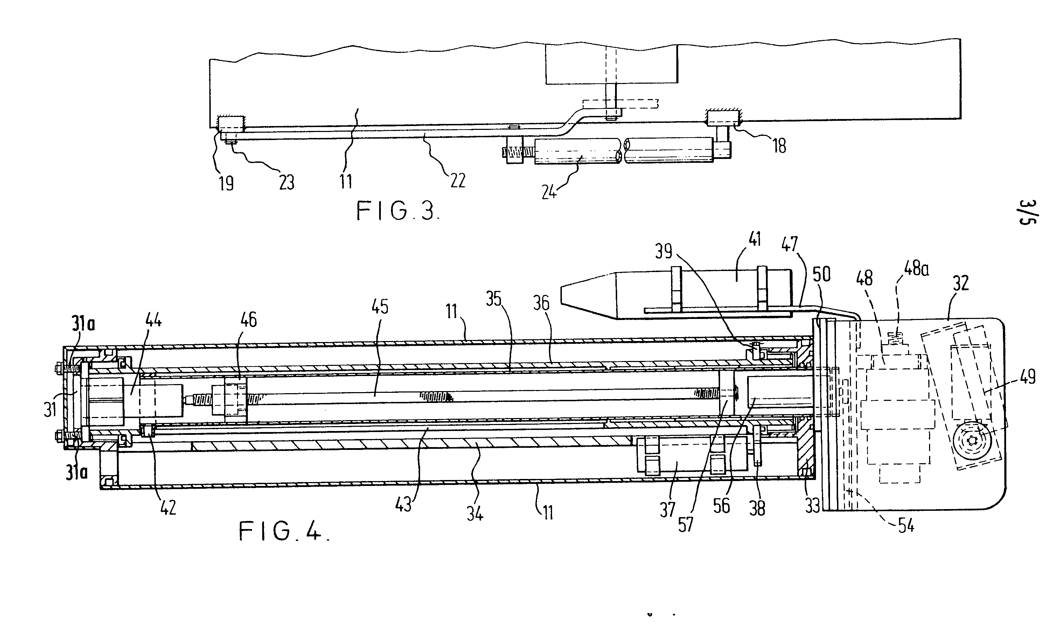

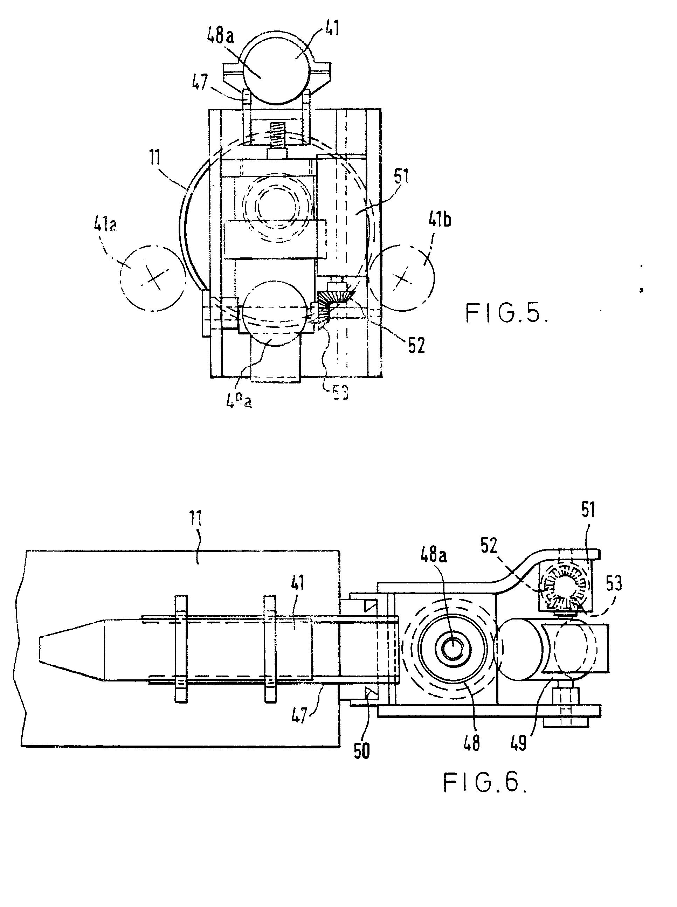

Turning now to Figure 4, this shows details of the internal components of the body 11, and also shows a cutter and camera unit which is indirectly mounted on the body so as to be carried thereby through the pipe and adjusted and operated within the pipe under remote control, with monitoring by the camera. The interior of the body 11 is maintained under a slight superatmospheric pressure so as to prevent inward leakage of dust and other foreign matter. Fixedly mounted within the body 11 by means of screws 31a is a rear end plate 31, and at the opposite end adjacent the camera unit indicated generally by 32 is a front end plate 33, also fixed. Also fixedly mounted within the body is a chassis plate 34. The unit 32 is mounted on a main shaft 35 which is longitudinally adjustable with respect to a rotary shaft 36 which is mounted in bearings in or on the end plates 31 and 33. Rotation of the shaft 36 is obtained by means of a motor and gear box unit 37 having a drive pinion 38 meshing with a pinion 39 solid on the shaft 36. The motor 37 is reversible and is designed so that the shaft 36 can carry the unit 32 through an arc of about 260°. In order to see the extent of this arc, reference may be made to figure 5 which shows a second camera 41 mounted in fixed position on the unit, and its extreme positions are shown at 41a and 41b.

In order that the axial position of the unit 32 may be varied in relation to the body 11, the main shaft 35 is slidable within the rotating shaft 36 and is prevented from rotation relative thereto by means of a sliding stud 42 engaged in a guide slot 43 in the rotating shaft 36. In order to achieve controlled longitudinal movement of the shaft 35, a reversible motor and gear box unit     44 is mounted on the rear end plate 31 and drives a lead screw 45 co-operable with a captive nut device 46 solid with the shaft 35. By this means, fine and continuous adjustment of the position of the unit 32 axially relative to the body 11 can be achieved.

The unit 32 itself carries the camera 41 already referred to in fixed position mounted on cantilever brackets 47, and in addition it carries a pneumatic cutter motor 48 with an output 48a adapted to mount a suitable cutter which is chosen to meet the duty in hand. The motor casing is also fixedly mounted on the unit 32.
Also mounted on the unit 32 is a second televsion camera
49 which is pivotable from the position shown in Figures
4 and 6, in which it is trained on the operative end of the
cutter, to a forwardly pointing position illustrated in
phantom in Figure 4 and in full lines in Figure 5 indicated
by the reference 49a.  Limit stops may be provided to
stabilize the camera in these two end positions, and the
drive between them is obtained from a reversible motor
and gear box unit 51 having an output bevel  gear 53
connected to the mounting for the camera 49.  The camera
49 may be stopped at any required intermediate position.

In order to provide radial adjustment of the
cutter, and cameras 41 and 49, the unit 32 is mounted in
a slideway 50, and is provided with a rack 54 co-operable
with a pinion 55 driven by a reversible motor and gear box
unit 56 mounted for movement with the shaft 35 by means
of a plate 57.

It is envisaged that the motors 37, 44, 51 and 56
will all be electrically driven.  The unit 32 will
also carry lights for illuminating the area being worked
on by the cutter driven by the motor 48, and also directed
along the pipes in the direction of movement of the
carriage, namely to the right as illustrated so as to
illuminate the areas covered by the camera 41 and the
camera 49 when in the forwardly pointing position.

The air supply for the ram 24 and the cutter motor 48 will be controlled by solenoid valves mounted in or on the body 11.

When a pipe is provided with a lining in the manner hereinbefore described, the lining is cured under a certain amount of pressure, and therefore bulges somewhat into the lateral connections to the original pipe line and these bulges can be viewed by means of the cameras 41 and 49 pointing down the pipeline. The carriage is winched through pipeline with the lighting on and the cameras trained forward, and the operator can see when a bulge, indicating a lateral connection , is approached. He then stops the carriage by braking the winch and extends the rams 24 to push the clamping plate 21 against the lining to stabilize the body 11. The camera 49 is then swung into the position where it is trained on the working end of the cutter and the longitudinal and rotary or angular positions of the unit 32 are adjusted until the cutter is lined up on the point to be cut. The motor 56 is then started to advance the cutter and the motor 48 is also started when appropriate to commence cutting. If longitudinal, angular or radial adjustment of the cutter is required during cutting, this can be continuously carried out by appropriate operation of the motors 44, 37 and 56, and when the cut is complete the unit 32 is returned to the rest position, the carriage is released by retraction of the rams 24, the camera 49 return to its forward pointing position and the winching recommenced.

If required, splash guards can be provided to minimise the amount of splashing into the lens of the camera 49 in particular.

The space within the body 11 can below the shaft 36 in the position illustrated in Figure 4 may be utilised for spare pipeline and cable to enable controls to be taken to the motor 56 as it moves longitudinally relative to the body 11, and the area below the chassis plate 34 is preferably also used to house printed circuit boards for the controls and also for the television cameras. By mounting the bulk of the electronic components of the cameras 49 and 41 within the body 11, the size of the cameras themselves to be mounted on the unit 32 can be reduced, and the advantages of this will be clear. Also, some preset controls for the cameras, which may need to be periodically adjusted are mounted for access from outside the body 11, so that the unit need not be dismantled for the adjustment to be made.

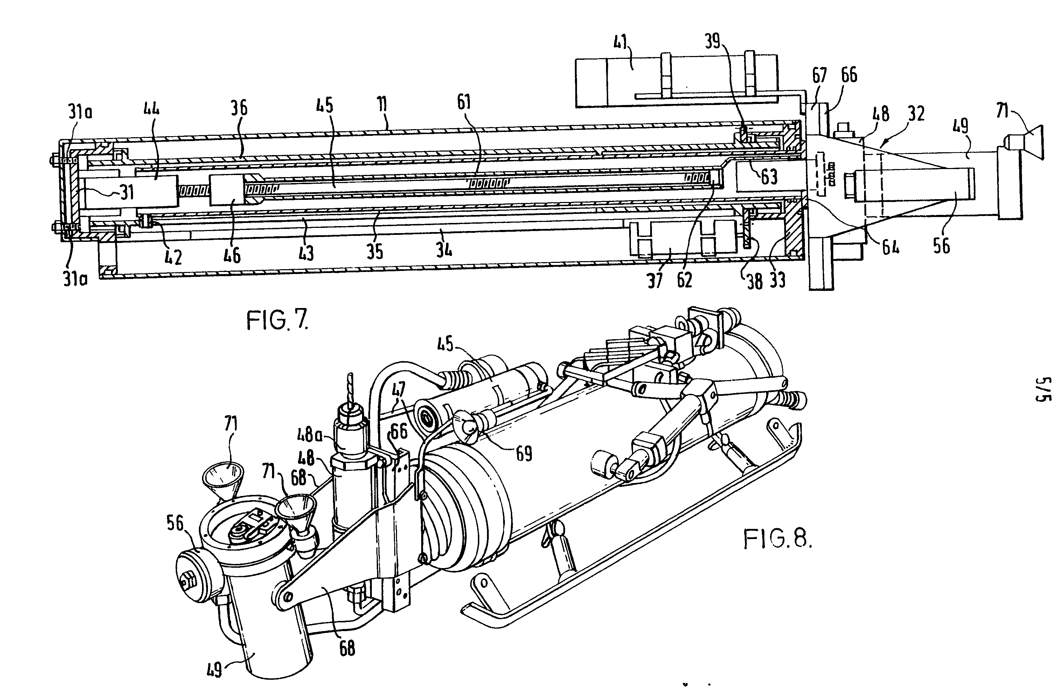

Turning now to figures 7 and 8, various modifications are shown. In particular figure 7 shows the lead screw 45 as being slidably mounted in a guide tube 61 by means of an enlarged head 62. This gives support for the screw 45 while enabling reasonable simple dismanting for maintenance The guide tube 61 acts as a mount for the captive nut 46 and has a tongue 63 solidly attached to end plate 64 on the main shaft 35. Also, as shown in both figures 7 and 8, the camera and cutter unit 32 is arranged so that only the cutter 48 and its motor are mounted on a slide 66 cooperating with a slideway 67 solid with the end plate 64 as the main shaft 35. The camera 49 and its tilt motor and gear box unit 56 are mounted on brackets 68 solid with the slideway 67 and the cantilever arms 47 for the camera 41 are also mounted on the brackets 68. Also shown are lights 69 on the camera 41 and a pair'of lights 71 on the camera 49, which is shown in an intermediate position in figure 8 for clarity of illustration.

The cable for the tiltable camera 49 is taken in *via* the centre of a hollow pivot shaft or trunnion.

Various modifications may be made within the scope of the invention. For instance, instead of sets of four skids, two long runners could be used, or the carriage could be mounted on wheels. Also, the unit 32 could be fitted with a microphone for audible monitoring of the cutter operation. It has also been found adequate for the microphone to be mounted within the body 11. The exhaust air from the air motor 48 may be used to provide an air curtain to reduce splatter onto the camera 49.

- 13 -

Attention is drawn to     co-pending application
No.       filed simultaneously herewith and
entitled "Remote Inspection Equipment", which application
claims priority from U.K. Application No. 7940161.

CLAIMS:

1.    A lining cutter characterised by comprising a carriage (11) adapted to be drawn through a lined pipe or conduit, a cutter (48) adapted for rotary and radial adjustment on the carriage (11) so as to cut through the lining at desired locations, a television camera (49) mounted on the carriage (11) so as to be trainable on the operative end of the cutter (48) to monitor the position and activity thereof, and remotely operable controls for positioning and operating the cutter (48) and camera (49).

2.    A lining cutter according to claim 1, characterised in that the cutter (48) is mounted on a sliding block (32) to achieve radial adjustment.

3.    A lining cutter according to claim 2, characterised in that the camera (49) is mounted solid with a slideway (50) for the sliding block (32).

4.    A lining cutter according to claim 2 or 3, characterised in that the sliding block (32) is rotatable, together with a co-operating slideway (50), to achieve conjoint angular adjustment of the camera (49) and cutter (48).

5.    A lining cutter according to claim 4, characterised
in that  the block (32) and slideway (50) are
longitudinally adjustable on the carriage (11).

6.    A lining cutter according to any of the preceding
claims, characterised in that the carriage (11) is
provided with skids (12) to assist in its passage along
a lined pipe.

7.    A lining cutter according to claim 7, characterised
in that the carriage (11) is provided with a clamping
pad (21) to hold it in a selected position.

8.    A lining cutter according to any of the preceding
claims, characterised in that the camera (49) is arranged
for pivotal movement independently of the adjustment of
the position of the cutter (48) to enable it to be
trained along the pipe as well as on the operative
end of the cutter.

9.    A lining cutter according to any of the preceding
claims, characterised in that a second camera (41) is
mounted substantially in the plane of the cutter (48)
and axially and angularly fixed in relation thereto to
monitor the precise position of the cutter (45).

10. A lining cutter according to any of the preceding claims, characterised by including means for detecting the sound of the cutter striking on the harder material of the pipe or conduit and indicating the detection of such signal at a control position.

11. A method of cutting a lining in a lined pipe or conduit, using a lining cutter according to any of the preceding claims, characterised in that the carriage (11) is drawn through the pipe or conduit to a position wherein the cutter (48) is roughly axially aligned with the desired position of the cut, adjusting the position of the cutter (48) axially and angularly to the desired position of commencement of cutting, advancing the cutter (48) radially into position to initiate cutting and adjusting the position of the cutter (48) as the cutting progresses.

FIG.1.

FIG.2.

FIG.3.

FIG.4.

0029343

0029343

4/5

FIG.5.

FIG.6.

FIG. 7.

FIG. 8.

5/5

0029343